# EUROPÄISCHE PATENTSCHRIFT

(11) **EP 0 840 433 B1**
(45) Veröffentlichungstag und Bekanntmachung des Hinweises auf die Patenterteilung: **27.02.2002**
(21) Anmeldenummer: 96117429.9
(22) Anmeldetag: 30.10.1996
(51) Int. Cl.: H02M 7/538, H03K 17/567

(54) **Spannungsversorgung einer Ansteuerschaltung für ein Schaltmittel in einem Umrichter mit Spannungszwischenkreis**
Drive circuit voltage supply for switching means in a converter with intermediate voltage circuit
Alimentation de tension pour le circuit de commande d'un commutateur dans un convertisseur avec circuit intermédiaire de tension

(43) Veröffentlichungstag der Anmeldung: 06.05.1998
(73) Patentinhaber: SIEMENS AKTIENGESELLSCHAFT, 80333 München (DE)
(72) Erfinder: Göpfrich, Kurt, Dipl.-Ing., 91058 Erlangen (DE)

(56) Entgegenhaltungen:
- EP-A- 0 654 885
- CONFERENCE RECORD OF THE INDUSTRY APPLICATIONS CONFERENCE, DENVER, OCT. 2 - 5, 1994, Bd. 2, 2.Oktober 1994, INSTITUTE OF ELECTRICAL AND ELECTRONICS ENGINEERS, Seiten 1310-1316, XP000512513 BISWAS S K ET AL: "GATE DRIVE METHODS FOR IGBTS IN BRIDGE CONFIGURATIONS"

## Beschreibung

Schaltungsanordnung zur symmetrischen Spannungsversorgung einer Ansteuerschaltung für ein Schaltmittel eines Umrichters mit Spannungszwischenkreis

Die Erfindung bezieht sich auf eine Schaltungsanordnung zur symmetrischen Spannungsversorgung einer Ansteuerschaltung für ein Schaltmittel eines Umrichters mit Spannungszwischenkreis sowie ein Verfahren zum Betrieb der Schaltungsanordnung.

In der Leistungselektronik werden heute zur Ansteuerung drehzahlveränderlicher elektrischer Antriebe in der Regel Frequenzumrichter eingesetzt. Dabei nimmt der Umrichter mit Spannungszwischenkreis eine dominierende Stellung ein.

Zur Steuerung der Spannung im Spannungszwischenkreis ist ein Mittel zum Schalten der Zwischenkreisspannung erforderlich, welches über eine eigens dafür vorgesehene Ansteuerschaltung angesteuert wird. Diese Ansteuerschaltung muß mit der dafür erforderlichen Betriebsspannung versorgt werden, was herkömmlicherweise einen hohen Aufwand mit sich bringt.

Herkömmlicherweise wird die Ansteuerschaltung über einen Trafo aus der zentralen Stromversorgung mitversorgt. Dazu benötigt man somit eine Wechselspannung, die über einen zusätzlichen Stromversorgungsausgang zur Verfügung gestellt werden muß. Neben dem damit verbundenen und kostenintensiven zusätzlichen Aufwand an Versorgungsleitungen stellt insbesondere der erforderliche Trafo bzw. der Übertrager einen erheblichen Kostenfaktor dar.

Hinzu kommt, daß eine vorgeschriebene galvanische Trennung zwischen Primär- und Sekundärkreis den hohen Anforderungen zur sicheren elektrischen Trennung gemäß EN 501 78 genügen muß. Dies erfordert den Einsatz besonders sicherer und somit entsprechend kostenintensiverer Trafos bzw. Übertrager.

Da die Ansteuerleistung zur Ansteuerung des Schaltmittels von der Anzahl der Ein-/Ausschaltvorgänge pro Zeiteinheit abhängig ist, muß der Ansteuer-Trafo bzw. -Übertrager stets für die maximale Ansteuerleistung ausgelegt werden. Auch dies hat zur Folge, daß entsprechend großdimensionierte und somit extrem teuere Trafos eingesetzt werden müssen.

Aus dem Konferenzbericht "Gate drive methods for IGBTs in bridge configurations", abgedruckt in IEEE, Bd. 2, 2. Okt. 1994, Seiten 1310 bis 1316, ist eine Spannungsversorgung einer Ansteuerschaltung für ein Schaltmittel mit einer positiven und einer negativen Versorgungsspannung bekannt. Diese Spannungsversorgung ist mit dem Spannungszwischenkreis eines Umrichters verknüpft. Die negative Versorgungsspannung wird dabei entweder über einen DC/DC-Konverter oder durch eine zweite separate Versorgungsschaltung erzeugt. Eine derartige Schaltungsanordnung ist jedoch nicht für eine symmetrische Spannungsversorgung jedes beliebigen Schaltmittels einsetzbar.

Aus der EP 0 654 885 A1 ist eine Spannungsversorgung einer Ansteuerschaltung aus einem Spannungszwischenkreis bekannt, welche lediglich eine unsymmetrische Spannungsversorgung ermöglicht. Bei dieser Schaltungsanordnung wird ein LC-Schwingkreis eingesetzt, der aus dem Spannungszwischenkreis des Umrichters angeregt wird. Dadurch wird eine entsprechende Energie zur Aufladung eines Spannungsspeichers in Form eines Kondensators der Spannungsversorgung geliefert.

Aufgabe der vorliegenden Erfindung ist es daher, eine Schaltungsanordnung zur symmetrischen Spannungsversorgung einer Ansteuerschaltung für ein Schaltmittel eines Umrichters mit Spannungszwischenkreis anzugeben, die es ermöglicht, den Energiebedarf der Ansteuerung direkt aus den Spannungszwischenkreis zu decken.

Diese Aufgabe wird erfindungsgemäß mit den kennzeichnenden Merkmalen des Anspruchs 1 gelöst.

Dadurch erhält man eine aufwandsarme Schaltungsanordnung zur symmetrischen Spannungsversorgung einer Ansteuerschaltung für ein Schaltmittel eines Umrichters mit Spannungszwischenkreis, die die zuvor genannten Nachteile nicht mehr aufweist. Bei dieser Schaltungsanordnung wird der die positive bzw. negative Versorgungsspannung tragende Kondensator durch Ausschalten bzw. Einschalten des Schaltmittels geladen. Die Anzahl der Nachladevorgänge pro Zeiteinheit erfolgt proportional zur Taktfrequenz der Ansteuerschaltung. Da der Leistungsbedarf der Ansteuerschaltung ebenfalls proportional zur Taktfrequenz ist, funktioniert dieses Prinzip gemäß der vorliegenden Erfindung über einen großen Frequenzbereich.

In der Leistungselektronik wurden in den letzten Jahren die herkömmlicherweise als Schaltmittel eingesetzten Bipolartransistoren von den sogenannten Insulated Gate Bipolartransistoren IGBT verdrängt. Der wesentliche Vorteil der IGBTs ist dabei der geringe Aufwand in der Ansteuerleistung. Während bei einem Bipolartransistor der Basisstrom (I_{B} = I_{C}/β) und damit verbunden die Ansteuerleistung sehr hoch waren, muß beim IGBT nur das Gate "umgeladen" werden, was zur Folge hat, daß die Ansteuerleistung nur für Ein-/und Ausschaltvorgänge zur Verfügung gestellt werden muß.

Diese Vorzüge macht sich auch die vorliegende Erfindung in einer vorteilhaften Ausgestaltung der Schaltungsanordnung zunütze.

In einer weiteren vorteilhaften Ausgestaltung der Schaltungsanordnung gemäß der vorliegenden Erfindung wird die Störausstrahlung des Leistungsteiles minimiert. Dies geschieht dadurch, daß zu dem dritten Kondensator ein Widerstand elektrisch parallel geschaltet ist.

Um die im vorangehenden dargestellte Schaltungsanordnung gemäß der vorliegenden Erfindung optimal betreiben zu können, wird des weiteren ein Verfahren zum Betrieb einer solchen Schaltungsanordnung zur Spannungsversorgung einer Ansteuerschaltung für ein Schaltmittel eines Umrichters mit Spannungszwischenkreis im Anspruch 6 beansprucht.

Weitere Vorteile und erfinderische Einzelheiten ergeben sich aus der nachfolgenden Beschreibung eines Ausführungsbeispieles und in Verbindung mit den Figuren. Es zeigen im einzelnen:
- FIG 1: eine Schaltungsanordnung zur direkten Spannungsversorgung einer Ansteuerschaltung eines Schaltmittels aus dem Spannungszwischenkreis eines Umrichters und
- FIG 2: eine herkömmliche Schaltungsanordnung zur Spannungsversorgung der genannten Ansteuerschaltung.

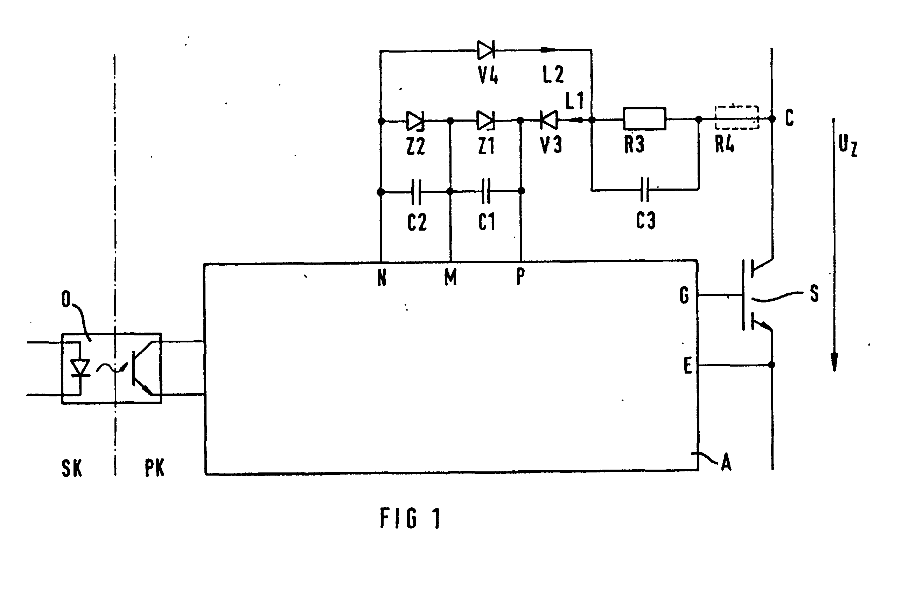

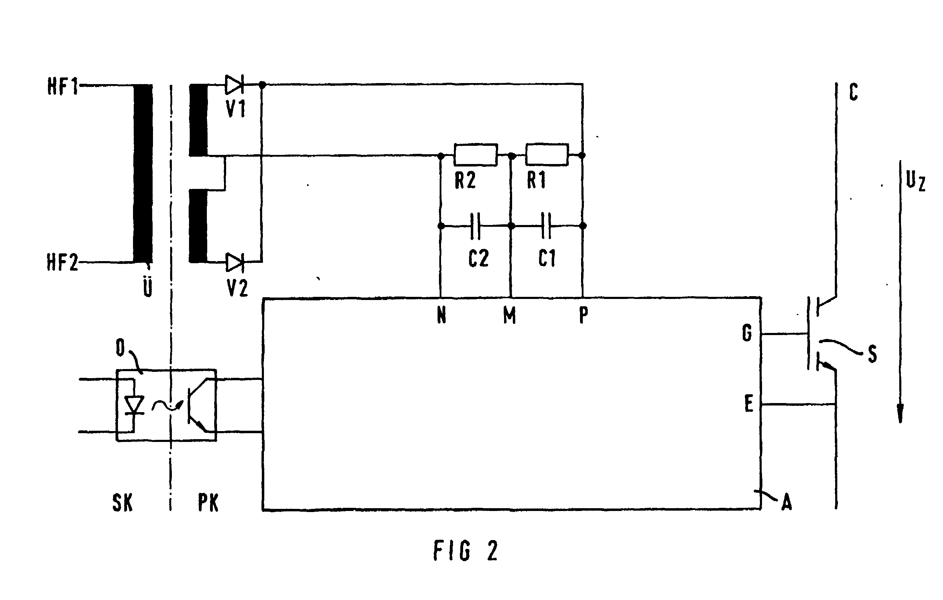

Die Elemente der Darstellung nach FIG 2 sind, soweit sie mit den Teilen der FIG 1 übereinstimmen und eine gleiche Funktion besitzen, mit denselben Bezugszeichen gekennzeichnet. Gleiche Elemente sind somit gattungsbildend gekennzeichnet, gleiche Elemente stellen jedoch nicht zwangsläufig dieselben dar.

Der besseren Verständlichkeit halber wird mit einer Beschreibung der Darstellung gemäß FIG 2 begonnen, da diese den herkömmlichen Stand der Technik darstellt. Die Beschreibung erfolgt anhand einer beliebigen Ansteuerschaltung A, welche eine symmetrische Spannungsversorgung (N,M,P) benötigt, da diese den Anwendungsfall einer unsymmetrischen Spannungsversorgung mitumfaßt. Der Umrichter selbst ist der besseren Übersichtlichkeit halber nicht gezeigt.

In der Darstellung gemäß FIG 2 ist eine Ansteuerschaltung A zur Ansteuerung eines Schaltmittels S gezeigt. Das Schaltmittel ist als bevorzugte Ausführungsform als Insulated Gate Bipolartransistor IGBT ausgeführt. Dieses wird über den Gateanschluß G von der Ansteuerschaltung A angesteuert. Über dem Schaltmittel S fällt die Zwischenkreisspannung U_{Z} ab. Die Ansteuerung und Spannungsversorgung der Ansteuerschaltung A, welche im Primärkreis PK des Umrichters angeordnet ist, erfolgt von seiten des Sekundärkreises SK. Die Trennung zwischen Primärkreis PK und Sekundärkreis SK ist durch eine strichpunktierte Linie angedeutet, welche auch das Erfordernis der galvanischen Trennung veranschaulichen soll.

Daher wird die Ansteuerschaltung A beispielhaft über einen Optokoppler O von seiten des Sekundärkreises SK mit Signalen beaufschlagt.

Die Versorgung der Ansteuerschaltung A mit der erforderlichen symmetrischen Spannung erfolgt durch einen Übertrager Ü, für den auf seiten des Sekundärkreises SK eine Wechselspannung HF1, HF2 bereitgestellt werden muß. Mit Hilfe zweier Dioden V1 und V2 wird aus der primärkreisseitigen Ausgangsspannung des Übertragers eine Gleichspannung gebildet.

Parallel zum positiven Spannungseingang, also zwischen Masse M und positivem Versorgungsspannungsanschluß P, ist eine Parallelschaltung aus einem Kondensator C1 und einem Widerstand R1 angeordnet. Das gleiche gilt für den negativen Spannungseingang zwischen Masse M und negativem Versorgungsspannungsanschluß N, welcher eine weitere Parallelschaltung aus einem zweiten Kondensator C2 und einem zweiten ohmschen Widerstand R2 aufweist.

Je nach Polarität der gleichgerichteten Ausgangsspannung des Übertragers Ü wird nun der Kondensator C1 zur Bereitstellung einer positiven Versorgungsspannung geladen, der Kondensator C2 umgekehrt zur Bereitstellung einer negativen Versorgungsspannung.

Da die Ansteuerleistung, wie eingangs bereits angedeutet, von der Anzahl der Ein-/Ausschaltvorgänge pro Zeiteinheit, somit also der Taktfrequenz abhängig ist, muß der Übertrager Ü jeweils für die maximale Ansteuerleistung des Schaltmittels S ausgelegt werden, was den Einsatz besonders großdimensionierter und somit auch teurer Übertrager erforderlich macht.

Um diesen Aufwand und auch die damit verbundenen Nachteile zu umgehen, wird gemäß einem vorteilhaften Ausführungsbeispiel in der Darstellung gemäß FIG 1 folgende Lösung vorgeschlagen. Gezeigt ist ebenfalls das Schaltmittel S, welches über dessen Gateeingang G von der Ansteuerschaltung A angesteuert wird. Ebenfalls fällt über dem Schaltmittel S die Zwischenkreisspannung U_{Z} ab. Die Ansteuerschaltung A wird von der Sekundärseite SK über einen Optokoppler O mit Signalen beaufschlagt. Die ebenfalls erforderliche symmetrische Versorgungsspannung wird jedoch direkt aus dem Spannungszwischenkreis gewonnen.

Parallel zum positiven und dem negativen Spannungseingang sind ebenfalls Kondensatoren C1 und C2 angeordnet, die somit jeweils zwischen Masse M und positiven Versorgungsspannungseingang P (C1) und negativen Versorgungsspannungseingang N (C2) geschaltet sind. Parallel zu den beiden Kondensatoren C1 und C2 sind jeweils bezüglich der zu erzeugenden positiven bzw. negativen Versorgungsspannung in Sperrichtung Zenerdioden Z1 bzw. Z2 angeordnet. Der Wert der jeweiligen Durchbruchspannung der Zenerdioden Z1 bis Z2 ist jeweils so bemessen, daß er der für die Ansteuerschaltung A erforderlichen positiven bzw. negativen Versorgungsspannung entspricht.

Am Anschluß der positiven Versorgungsspannung P ist mit im Vergleich zur Zenerdiode Z1 entgegengesetzter Polarität eine Diode V3 angeordnet, welche bezüglich der positiven Versorgungsspannung mithin in Flußrichtung geschaltet ist. Analog dazu ist am Anschluß der negativen Versorgungsspannung N ebenfalls mit umgekehrter Polarität zur dort zugehörigen Zenerdiode Z2 eine weitere Diode V4 ebenfalls in Flußrichtung bezüglich der negativen Versorgungsspannung geschaltet. Die beiden anderen Anschlüsse der Dioden V3 und V4 sind zusammengeführt und über eine Parallelschaltung aus einem weiteren Kondensator C3 und einem ohmschen Widerstand R3 mit dem positiven Zweig des Spannungszwischenkreises des Umrichters verbunden. Im Falle des Einsatzes eines IGBTs als Schaltmittel S ist dies somit dessen Kollektoranschluß C.

Sobald eine Spannung U_{Z} am Zwischenkreis anliegt, wird der Kondensator C1 zur Erzeugung einer positiven Versorgungsspannung durch einen Ladestrom L1 über den Widerstand R3 und die Diode V3 geladen, bis die Zenerspannung der in Sperrrichtung betriebenen Zenerdiode Z1 erreicht ist. Dieser Zustand wird bis zum ersten Einschalten des Schaltmittels S - also bis zur Impulsfreigabe - beibehalten.

Beim Einschalten des Schaltmittels S fließt über den Kondensator C3 und die Diode V4 ein Ladestrom L2 zur Erzeugung einer negativen Versorgungsspannung in den Kondensator C2, so daß nach einigen Einschaltvorgängen des Speichermittels S auch der durch die Zenerspannung der Zenerdiode C2 vorgegebene Endwert der negativen Spannung erreicht wird. Beim Ausschalten des Schaltmittels S wird der die positive Versorgungsspannung tragende Kondensator C1 ebenfalls über den Kondensator C3 und die Diode V3 nachgeladen. Dies geschieht so, daß die Anzahl der Nachladevorgänge pro Zeiteinheit sowohl für den Kondensator C1 wie auch für den Kondensator C2 proportional zur Taktfrequenz der Ansteuerschaltung A erfolgt. Da der Leistungsbedarf der Ansteuerschaltung A ebenfalls proportional zur Taktfrequenz ist, funktioniert dieses Prinzip gemäß der vorliegenden Erfindung hervorragend über einen großen Frequenzbereich.

Alternativ kann eine symmetrische Spannung auch erzeugt werden, indem wie beschrieben eine positive Spannung erzeugt wird, aus der über eine Umkehrung der Polarität eine entsprechende negative Spannung abgeleitet wird. Dies kann beispielsweise über einen getakteten Schaltregler erreicht werden.

Um die Störausstrahlung des Leistungsteiles zu minimieren, wird ein RC-Glied parallel zur Kollektor-Emitter-Strecke des beispielhaft als Schaltmittel S dargestellten IGBTs geschaltet. Zur Realisierung eines solchen RC-Glieds kann, wie in der Darstellung gemäß FIG 1 beispielhaft anhand des gestrichelten Widerstandes R4 angedeutet, ein Widerstand zwischen die Parallelschaltung aus Kondensator C3 und ohmschen Widerstand R3 und Kollektor C des Schaltmittels S geschaltet werden. Um die Kollektor-Emitter-Strecke des IGBTs als Schaltmittel S über das so mittels des Widerstandes R4 und dem Kondensator C3 gebildete RC-Glied zu überbrücken, ist der Emitter-Anschluß E des IGBTs ebenfalls an die Ansteuerschaltung A geführt.

Zum besseren Verständnis kann man die Schaltungsanordnung auch als Ergänzung des RC-Gliedes betrachten, in der ein Teil der Energie sinnvoll genutzt wird, die ansonsten im Widerstand des RC-Gliedes in Wärme umgewandelt werden würde. Somit wird durch die erfindungsgemäße Schaltungsanordnung auch eine erheblich bessere Energieausbeute erreicht.

Da mit der Spannungsversorgung über die Wechselspannungsanschlüsse HF1 und HF2 ein Teil der Schnittstelle zum Schaltmittel S entfallen kann und die Taktfrequenz kaum einen Einfluß auf die Dimensionierung des Schaltmittels, beispielsweise eines IGBTs, besitzt, ist durch die Schaltungsanordnung gemäß der vorliegenden Erfindung auch eine höhere Integration der Ansteuerschaltung A erreichbar.

## Patentansprüche

1. Schaltungsanordnung zur symmetrischen Spannungsversorgung einer Ansteuerschaltung (A) für ein Schaltmittel (S) eines Umrichters mit Spannungszwischenkreis, wobei ein Kollektoranschluß (C) des Schaltmittels (S) mit einem positiven Zweig des Spannungszwischenkreises des Umrichters verknüpft ist und wobei die Ansteuerschaltung (A) einen positiven und einen negativen Versorgungsspannungsanschluß (P,N) und einen Masseanschluß (M) aufweist, der mit einem Emitter-Anschluß (E) des Schaltmittels (S) verbunden ist, **dadurch gekennzeichnet, daß** jeweils zwischen dem Masseanschluß (M) und dem positiven und dem negativen Versorgungsspannungsanschluß (P,N) der Ansteuerschaltung (A) eine Parallelschaltung aus Kondensator (C1,C2) und einer in Sperrichtung gepolte Zenerdiode (Z1,Z2) angeordnet ist, daß an den nicht mit dem Masseanschluß (M) verbundenen Anschlüssen der beiden Zenerdioden (Z1,Z2) jeweils mit entgegengesetzter Polarität eine Diode (V3,V4) angeordnet ist, deren freie Anschlüsse miteinander und über einen dritten Kondensator (C3) mit dem Kollektoranschluß (C) des Schaltmittels (S) des Umrichters verbunden sind.

2. Schaltungsanordnung nach Anspruch 1, **dadurch gekennzeichnet, daß** als Schaltmittels (S) ein Transistor vorgesehen ist.

3. Schaltungsanordnung nach Anspruch 1, **dadurch gekennzeichnet, daß** als Schaltmittel (S) ein Insulated-Gate-Bipolar-Transistor (IGBT) vorgesehen ist.

4. Schaltungsanordnung nach einem der Ansprüche 1 bis 3, **dadurch gekennzeichnet, daß** dem dritten Kondensator (C3) ein Widerstand (R3) elektrisch parallel geschaltet ist.

5. Schaltungsanordnung nach einem der Ansprüche 1 bis 3, **dadurch gekennzeichnet, daß** zwischen dem Kollektoranschluß (C) des Schaltmittels (S) und des dritten Kondensators (C3) ein weiterer Widerstand (R4) geschaltet ist.

6. Verfahren zum Betrieb der Schaltungsanordnung nach Anspruch 1, **gekennzeichnet** mit folgenden Verfahrensschritten:
a) mit Anliegen einer ersten Spannung (U_{Z}) am Spannungszwischenkreis des Umrichters wird der parallel zum positiven Spannungseingang (P,M) der Ansteuerschaltung (A) angeordnete erste Kondensator (C1) über die in Flußrichtung gepolte Diode (V3) aus dem Spannungszwischenkreis geladen, bis die Zenerspannung der parallel zum ersten Kondensator (C1) in Sperrichtung angeordneten ersten Zenerdiode (21) erreicht ist,
b) verbunden mit jedem Einschaltvorgang des Schaltmittels (S) wird der zweite parallel zum negativen Spannungseingang (N, M) angeordnete Kondensator (C2) durch den dritten Kondensator (C3) und der zweiten bezüglich der negativen Spannung (N, M) ebenfalls in Flußrichtung gepolte Diode (V4) fließenden Ladestrom (L2) aus dem Spannungszwischenkreis des Umrichters bis zum Erreichen der Zenerspannung der zweiten ebenfalls parallel zum zweiten Kondensator (C2) in Sperrichtung angeordneten Zenerdiode (Z2) geladen bzw. nachgeladen und
c) verbunden mit jedem Ausschaltvorgang des Schaltmittels (S) wird der erste Kondensator (C1) ebenfalls durch einen über den dritten Kondensator (C3) und die erste bezüglich der positiven Spannung in Flußrichtung gepolte Diode (V3) fließenden Ladestrom (L1) aus dem Spannungszwischenkreis des Umrichters bis zum Erreichen der Zenerspannung der ersten Zenerdiode (Z1) nachgeladen,
d) wobei die Anzahl der Nachladevorgänge proportional zur Taktfrequenz des Schaltmittels (S) ist.

## Claims

1. Circuit arrangement for the symmetrical voltage supply of a drive circuit (A) for a switching means (S) in a converter with an intermediate voltage circuit, with a collector terminal (C) of the switching means (S) being linked to a positive branch of the intermediate voltage circuit of the converter and with the drive circuit (A) having a positive and a negative supply voltage terminal (P,N) and an earth terminal (M) which is connected to an emitter terminal (E) of the switching means (S), **characterized in that** arranged in each case between the earth terminal (M) and the positive and the negative supply voltage terminal (P,N) of the drive circuit (A) there is a respective parallel circuit arrangement consisting of a capacitor (C1,C2) and a Zener diode (Z1,Z2) which is poled in the reverse direction, **in that** arranged at the terminals of the two Zener diodes (Z1,Z2) that are not connected to the earth terminal (M) and having in each case opposite polarity there is a diode (V3, V4), the free terminals of which are connected to each other and are connected by way of a third capacitor (C3) to the collector terminal (C) of the switching means (S) of the converter.

2. Circuit arrangement according to claim 1, **characterized in that** a transistor is provided as the switching means (S).

3. Circuit arrangement according to claim 1, **characterized in that** an insulated-gate-bipolar-transistor (IGBT) is provided as the switching means (S).

4. Circuit arrangement according to one of claims 1 to 3, **characterized in that** a resistor (R3) is connected electrically in parallel with the third capacitor (C3).

5. Circuit arrangement according to one of claims 1 to 3, **characterized in that** a further resistor (R4) is connected between the collector terminal (C) of the switching means (S) and the third capacitor (C3).

6. Method for operating the circuit arrangement according to claim 1, **characterized by** the following method steps:
a) with application of a first voltage (U_{Z}) to the intermediate voltage circuit of the converter the first capacitor (C1), which is arranged parallel to the positive voltage input (P,M) of the drive circuit (A), is charged from the intermediate voltage circuit by way of the diode (V3), which is poled in the forward direction, until the Zener voltage of the first Zener diode (Z1), which is arranged parallel to the first capacitor (C1) in the reverse direction, is reached;
b) connected with each closing operation of the switching means (S) the second capacitor (C2), which is arranged parallel to the negative voltage input (N, M), is charged or recharged by means of the charging current (L2) that flows by way of the third capacitor (C3) and the second diode (V4), which is likewise poled in the forward direction with regard to the negative voltage (N, M), from the intermediate voltage circuit of the converter until the Zener voltage of the second Zener diode (Z2) that is likewise arranged parallel to the second capacitor (C2) in the reverse direction is reached, and
c) connected with each opening operation of the switching means (S) the first capacitor (C1) is likewise recharged by means of a charging current (L1) that flows by way of the third capacitor (C3) and the first diode (V3), which is poled in the forward direction with regard to the positive voltage, from the intermediate voltage circuit of the converter until the Zener voltage of the first Zener diode (Z1) is reached;
d) with the number of recharging operations being proportional to the clock frequency of the switching means (S).

## Revendications

1. Montage d'alimentation symétrique en tension d'un circuit (A) de commande d'un moyen (S) de commutation d'un convertisseur de fréquence, comprenant un circuit intermédiaire de tension, une borne (C) de collecteur du moyen (S) de commutation étant reliée à une branche positive du circuit intermédiaire de tension du convertisseur et le circuit (A) de commande ayant une borne positive (P) et négative (N) de tension d'alimentation et une borne (M) de masse qui est reliée à une borne (E) d'émetteur du moyen (S) de commutation, **caractérisé en ce qu'**il est interposé entre la borne (M) de masse et la borne positive (P) et la borne négative (N) de tension d'alimentation du circuit (A) de commande un circuit parallèle constitué d'un condensateur (C1, C2) et d'une diode (Z1, Z2) Zener polarisée dans le sens inverse, **en ce qu'**il est prévu sur les bornes des deux diodes (Z1, Z2) Zener, qui ne sont pas reliées à la borne (M) de masse, respectivement une diode (V3, V4) de polarité opposée, dont les bornes libres sont reliées entre elles et par l'intermédiaire d'un troisième condensateur (C3) à la borne (C) de collecteur du moyen (S) de commutation du convertisseur.

2. Montage suivant la revendication 1, **caractérisé en ce qu'**il est prévu comme moyen (S) de commutation un transistor.

3. Montage suivant la revendication 1, **caractérisé en ce qu'**il est prévu comme moyen (S) de commutation un transistor bipolaire à grille isolée (IGBT).

4. Montage suivant l'une des revendications 1 à 3, **caractérisé en ce qu'**une résistance (R3) est montée électriquement en parallèle au troisième condensateur (C3).

5. Montage suivant l'une des revendications 1 à 3, **caractérisé en ce qu'**une autre résistance (R4) est montée entre la borne (C) du collecteur du moyen (S) de commutation et le troisième condensateur (C3).

6. Procédé pour faire fonctionner le montage suivant la revendication 1, ayant les stades de procédé suivants :
a) en appliquant une première tension (U_{Z}) au circuit intermédiaire de tension du convertisseur on charge le premier condensateur (C1) monté en parallèle à l'entrée positive (P, M) de tension du circuit (A) de commande, à partir du circuit intermédiaire de tension et par l'intermédiaire de la diode (V3) polarisée dans le sens direct, jusqu'à ce que soit atteinte la tension Zener de la première diode (Z1) Zener montée dans le sens inverse en parallèle au premier condensateur (C1),
b) en liaison avec chaque opération de commutation du moyen (S) de commutation, le deuxième condensateur (C2) monté en parallèle à l'entrée négative (N, M) de tension est chargé ou rechargé par le troisième condensateur (C3) et par le courant (L2) de charge passant dans la deuxième diode (V4), également polarisée dans le sens direct par rapport à la tension (N, M) négative et provenant du circuit intermédiaire de tension du convertisseur, jusqu'à que soit atteinte la tension Zener de la deuxième diode (Z2) Zener montée dans le sens inverse, également en parallèle au deuxième condensateur (C2) et
c) en liaison avec chaque opération de commutation du moyen (S) de commutation, le premier condensateur (C1) est rechargé également par un courant (L1) de charge provenant du circuit intermédiaire de tension et passant par le troisième condensateur (C3) et la première diode (V3) montée dans le sens direct par rapport à la tension positive, jusqu'à ce que soit atteinte la tension Zener de la première diode (Z1) Zener,
d) le nombre des opérations de rechargement étant proportionnel à la fréquence de commutation du moyen (S) de commutation.
